# EUROPEAN PATENT APPLICATION

(11) **EP 0 522 656 A1**
(43) Date of publication of application: **13.01.1993**
(21) Application number: 92202070.6
(22) Date of filing: 06.07.1992
(51) Int. Cl.: C08C 19/00, C08G 61/08

(54) **Products**

(30) Priority: 12.07.1991 GB 9115055
(71) Applicant: FMC CORPORATION (UK) LIMITED, Manchester M17 1WT (GB)
(72) Inventor: Cole-Hamilton, David John, Fife, Scotland KY16 8PP (GB); Narayanan, Pondicherry, c/o T.f.Prof. Jan H Nasman, Porthansgatan 3-5, SF-20500 Abo (FI); Randell, Donald Richard, Stockport, Cheshire (GB); Clubley, Brian George, Wilmslow, Cheshire (GB)
(74) Representative: Hamilton, Raymond

(57) **Abstract**

Products obtained by subjecting unsaturated polymers containing pendant double bonds or pendant and backbone double bonds to hydrocarboxylation or, in any order, to hydrocarboxylation, and one or more reactions selected from hydroformylation, hydrogenation and epoxidation, with the proviso that when (i) the unsaturated polymer is a polybutadiene and (ii) said modification is by hydrocarboxylation only and (iii) only pendant double bonds are hydrocarboxylated, hydrocarboxylation is effected to attach a carboxyl group only to the terminal carbon atom of the chain containing the pendant double bond(s).

## Description

The present invention relates to products obtained by hydrocarboxylation and, optionally, further modification of certain unsaturated polymers.

Polymers with a carbon backbone and pendant functional groups find extensive use both as base materials and as additives to modify the properties of other materials or systems. Such polymers may be prepared by two general methods, viz a) by homo polymerizing or copolymerizing monomers containing functional groups or b) by modification of a polymer to introduce a new group or change an existing one, often called post polymerization chemical modification.

In the first method the position of the functional groups is determined and limited by the structures of the monomers and their reactivity. In the second method, reactions on polymers are difficult to control, particularly with respect to selectivity or complete reaction.

Many reactions under homogeneous catalysis have been carried out on simple alkenes but, with the exception of hydrogenation, these reactions have rarely been performed on larger molecules or unsaturated polymers.

In accordance with the present invention products useful as water treatment additives and in the treatment of wood can be prepared by polymer modification using homogeneous catalysis. The method facilitates the production of polymers with a high degree of selectivity and with a high level of functional group incorporation. The novel products can be prepared by hydrocarboxylation of unsaturated polymers containing pendant and backbone double bonds such that at least one pendant double bond is hydrocarboxylated.

The present invention provides a product obtained by modification, through hydrocarboxylation or, in any order, hydrocarboxylation and one or more reactions selected from hydroformylation, hydrogenation and epoxidation, of a polymer of formula 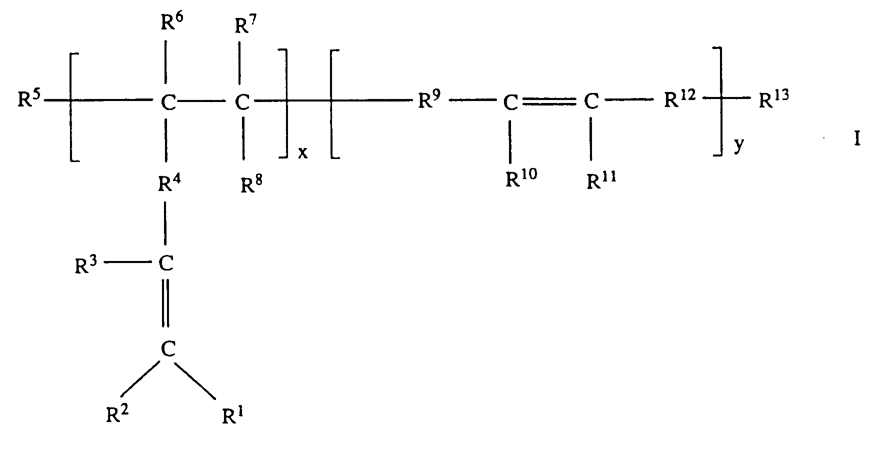
where R¹, R², R³, R⁵, R⁶, R⁷, R⁸, R¹⁰, R¹¹ and R¹³ each independently denote a hydrogen atom, C₁ to C₁₀ alkyl, phenyl, halogen, hydroxyl or carboxyl;
R⁴ denotes a divalent group of formula II 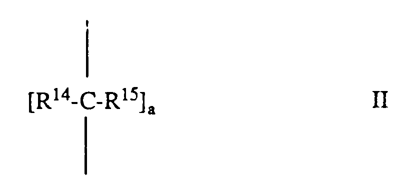
or a divalent cycloaliphatic or heterocyclic group of 3 to 10 carbon atoms;
R⁹ denotes a divalent group of formula III 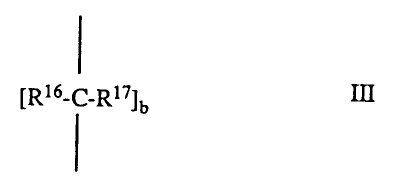
or a divalent cycloaliphatic or heterocyclic group of 3 to 10 carbon atoms;
R¹² denotes a divalent group of formula IV 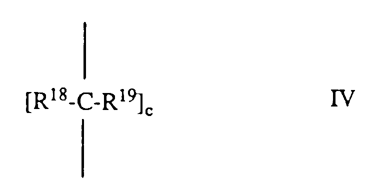
or a divalent cycloaliphatic or heterocyclic group of 3 to 10 carbon atoms;
R¹⁴, R¹⁵, R¹⁶, R¹⁷, R¹⁸ and R¹⁹ each independently denote a hydrogen atom, C₁ to C₁₀ alkyl, halogen, hydroxyl, carboxyl, C₁ to C₁₀ alkoxycarbonyl, C₁ to C₁₀ hydroxyalkoxycarbonyl or C₁ to C₁₀ alkylcarbonyloxy; or R¹⁴ and R¹⁵ alternatively each independently denote phenyl;
x is an integer from 1 to 50,000, y is an integer from 0 to 50,000, such that x + y is at least 3; and a, b and c are the same or different and are each integers from 0 to 10; the product comprising a polymer of formula 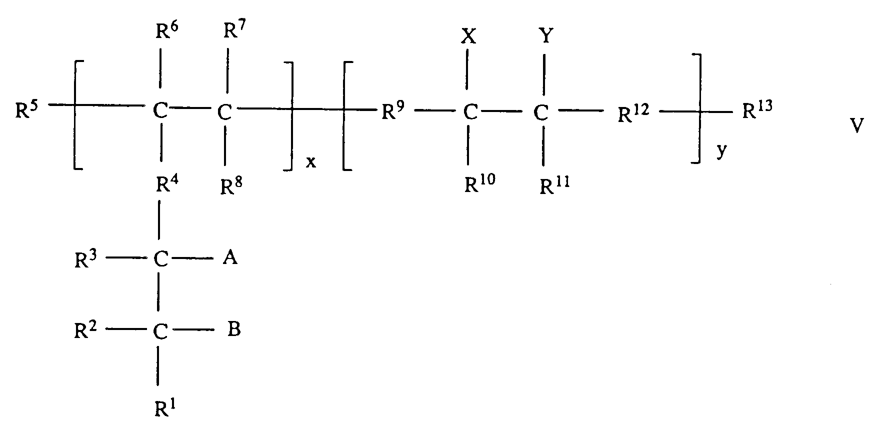
where
R¹ to R¹³, x and y are as hereinbefore defined, and one of A and B denotes a hydrogen atom and the other denotes a hydrogen atom, a carboxyl group or a -CHO group, or A and B together with an oxygen atom denote an epoxide group, or A and B together denote a single bond, at least one of the x symbols A or the x symbols B denoting a carboxyl group; one of X and Y denotes a hydrogen atom and the other denotes a hydrogen atom, a carboxyl group or a -CHO group, or X and Y together with an oxygen atom denote an epoxide group, or X and Y together denote a single bond; with the proviso that when (i) the polymer of formula I is a polybutadiene and (ii) said modification is by hydrocarboxylation only and (iii) only pendant double bonds are hydrocarboxylated, the product consists substantially of molecules of formula V where A denotes a hydrogen atom and B denotes carboxyl and is substantially free from molecules of formula V where A denotes carboxyl and B denotes a hydrogen atom.

The atoms or groups R¹ to R³, R⁵ to R⁸ and R¹⁰ to R¹⁹ may be the same or different. Where one or more of them denote or contain alkyl or hydroxyalkyl groups, these groups preferably have 1 to 8 carbon atoms and may be methyl, ethyl, n-propyl, isopropyl, n-butyl, isobutyl, tert-butyl, n-pentyl, neopentyl, n-hexyl, n-heptyl, isoheptyl, n-octyl or 2-ethyl hexyl groups or, for R¹⁴ to R¹⁹, such alkyl groups substituted by a hydroxyl group. Preferably, R¹ to R³, R⁵ to R⁸ and R¹⁰ to R¹³ denote hydrogen, methyl, phenyl, hydroxyl or carboxyl and R¹⁴ to R¹⁹ denote hydrogen, methyl, carboxyl, methoxycarbonyl, ethoxycarbonyl, n-butoxycarbonyl, 2-ethylhexyloxycarbonyl or methylcarbonyloxy.

The divalent groups R⁴, R⁹ and R¹² may be the same or different. When they denote a cycloaliphatic group they may be cycloalkylene, preferably of 5 to 8 carbon atoms, for example cyclopentylene, methylcyclopentylene, 1,1-dimethylcyclopentylene and 1,2-dimethylcyclopentylene. When these divalent groups denote a heterocyclic group, they may be a divalent oxygen heterocyclic group, preferably of 4 to 6 carbon atoms, for example a tetrahydrofurylene group or a 3,4-dimethyltetrahydrofurylene group.

Preferably, the groups R⁴, R⁹, and R¹² respectively denote groups of formulae II, III and IV as hereinbefore defined.

The values of a, b and c may be the same or different and may be, for example, from 0 to 8, preferably 0 to 5. In especially preferred embodiments a is o and b and c are each 1. When a, b, or c denote 0, R⁴, R⁹ and R¹² respectively denote a carbon-carbon single bond. The value of x may be, for example, from 1 to 20,000, preferably 1 to 10,000, more preferably 1 to 1000, especially 1 to 100. The value of y may be, for example, from 0 to 20,000, preferably 1 to 10,000, more preferably 1 to 1000, especially 1 to 100.

Polymers of formula V may have a number average molecular weight Mₙ ranging, for example, from 500 to 500,000, preferably from 500 to 100,000, more preferably from 500 to 10,000, especially from 1000 to 5000.

Polymers of formula V where y is at least 1 and at least one of the y symbols X or the y symbols Y denote a carboxyl group, other than where the polymer is a homopolymer or copolymer of acrylic or methacrylic acid, are novel. Also novel are polymers of formula V where at least one of the x symbols A, the x symbols B, the y symbols X and the y symbols Y denotes a -CHO group and polymers of formula V where in at least one of the x pairs A and B or the y pairs X and Y, A and B or X and Y are each hydrogen or where at least one of the x pairs A and B or the y pairs X and Y denotes an epoxide group. Further novel polymers of formula V are those where at least 63%, for example 65 to 95%, of the total of the symbols A or B and X or Y denote a carboxyl group, i.e. at least 63% of the double bonds in the polymer of formula I are hydrocarboxylated.

Certain preferred products of the invention are polymers of formula V where 20 to 100% of the x symbols B denote a carboxyl group, 80 to 0% of the x pairs A and B together denote a single bond, 0 to 100% of the y symbols X or Y denote a carboxyl group and 100 to 0% of the y pairs X and Y together denote a single bond, said polymers being hydrocarboxylation products as hereinbefore described obtained substantially free from molecules of formula V where A denotes carboxyl and B denotes a hydrogen atom. These preferred products include those where 60 to 100%, especially 70 to 100%, of the x symbols B denote a carboxyl group and 0 to 10%, especially 0% of the y symbols X or Y denote a carboxyl group; those where 10 to 80%, especially 20 to 70%, of the x symbols B denote a carboxyl group and 30 to 100%, especially 40 to 100%, of the y symbols X or Y denote a carboxyl group; and 100% hydrocarboxylated polymers, i.e. those where each of the x symbols B denote a carboxyl group and each of the y symbols X or Y denote a carboxyl group.

Especially preferred products of the invention are polybutadienes of formula V where R⁵ and R¹³ each independently denote hydrogen, phenyl, hydroxyl or carboxyl; R¹, R², R³, R⁶, R⁷, R⁸, R¹⁰ and R¹¹ each denote hydrogen; R⁴ denotes a carbon-carbon single bond; R⁹ and R¹² each denote a -CH₂ group; and x and y each denote 1 to 100. Specific preferred such polybutadienes are those having a number average molecular weight Mₙ of 500 to 10,000, particularly 1000 to 5000.

The present invention also provides a process for the modification of a polymer which comprises subjecting a polymer of formula I as hereinbefore defined to hydrocarboxylation or, in any order, to hydrocarboxylation and one or more other reactions selected from hydroformylation, hydrogenation and epoxidation, with the proviso that when
(i) the polymer of formula I is a polybutadiene,
(ii) said modification is by hydrocarboxylation only and
(iii) only pendant double bonds are hydrocarboxylated hydrocarboxylation is effected to attach a carboxyl group only at the carbon atom linked to R¹ and R².

Hydrocarboxylation and hydroformylation are addition reactions at a double bond of a polymer of formula I which introduce hydrogen and, respectively, -COOH and CHO into the polymers. Epoxidation converts a double bond into an epoxide group.

Hydrocarboxylation, hydroformylation and epoxidation are preferably carried out in the presence of a homogeneous catalyst. Hydrogenation may be effected conveniently using a homogeneous or heterogeneous catalyst. Epoxidation can be carried out without a catalyst by reacting the unsaturated polymer of formula I with a percarboxylic acid such as peroxyacetic acid.

Where the reactions do not convert all of the double bonds of the polymers of formula I, the reaction products may contain some residual unsaturation (products of formula V where at least one of the x pairs A and B together or at least one of the y pairs X and Y together denote a single bond).

Reaction conditions and, particularly, the nature of the catalyst may be chosen to give selectivity in double bond substitution. For example, the polymer of formula I may be reacted to give carboxyl substitution only on the pendant double bond(s). The remaining double bond(s) in the polymer backbone may then be hydrocarboxylated, if desired, for example using a different catalyst, or may be hydrogenated, hydroformylated or epoxidized.

Starting materials of formula I may be prepared by homopolymerizing or co-polymerizing dienes or higher functional polyenes, or by ring-opening metathesis polymerization of cyclic olefins.

Non-limiting examples of dienes which may be polymerized to give starting materials of formula I are; 1, 3 butadiene; 2,3 dimethyl-1,3-butadiene; 1,4-diphenyl; 1,3-butadiene; 2-methyl-1,3-butadiene (isoprene); 2-chloro-1; 3-butadiene (chloroprene); 1,4-pentadiene; 2,4-dimethyl-1,3-pentadiene; 2-methyl-1,3-pentadiene; 1,3-hexadiene; 1,4-hexadiene; 1,5-hexadiene; 2,4-hexadiene; 2,5-dimethyl-2,4-hexadiene; 1,7-octadiene and 1,9-decadiene. Where the diene is 1,3-butadiene or a derivative thereof, polymerization is performed to give either 1,2-polybutadiene or a mixture thereof with 1, 4-polybutadiene.

Non-limiting examples of cyclic olefins which may be used are cyclopentene, cyclooctene, cyclooctadiene, norbornene and 7-oxabicyclo [2,2,1] heptene.

Ethylenically unsaturated materials which may be copolymerized with dienes or polyenes to give polymers of formula I include, for example, unsaturated carboxylic acids or anhydrides or esters thereof, for example acrylic acid, methacrylic acid, itaconic acid, maleic anhydride, ethyl acrylate, methyl methacrylate, n-butyl acrylate and 2-ethylhexyl methacrylate, unsaturated hydrocarbons such as 1-decene or 1-octene, or vinyl esters such as vinyl acetate.

Preferably, the polymer of formula I is a homopolymer or copolymer of a diene, more preferably a polymer, especially a homopolymer, of 1, 3-butadiene.

The polymer of formula I may be reacted with carbon monoxide and water to effect hydrocarboxylation, with hydrogen to effect hydrogenation, with carbon monoxide and hydrogen to effect hydroformylation and with a peroxide such as tertiary butyl hydroperoxide to effect epoxidation. These reactions may be carried out over a wide range of temperatures and pressures and in various solvents, as in conventional catalyst-promoted reactions on unsaturated materials. The reaction temperature may be, for example, from 0 to 200^{o}C, preferably from 10 to 120^{o}C. The reaction may be carried out at pressures from 1 to 500 atmospheres. Suitable solvents in which the reaction may be carried out include ketones and ethers such as acetone, methyl ethyl ketone and, preferably, methyl isobutyl ketone and tetrahydrofuran.

Homogeneous catalysts suitable for use in the process of the present invention may be chosen from the large number of transition metal compounds known as homogeneous catalysts according to the degree of selectivity required. Suitable transition metal compounds include those of chromium, iron, cobalt, ruthenium, iridium, platinum, molybednum and, preferably, those of palladium, rhodium and nickel. They may be used together with co-catalysts such as copper, tin and zinc salts, preferably halides.

Examples of suitable catalysts for hydrocarboxylation and hydroformylation are cobalt and nickel carbonyl complexes such as Co₂ (CO)₈ and Ni(CO)₄, which generally require the use of high temperatures and pressures; rhodium complexes, including Rh₆(CO)₁₆, RhCl₃ 3H₂O, RhCl(PPh₃)₃ and Rh₂Cl₂(CO)₄; palladium compounds such as palladium (II) chloride or palladium (II) acetate together with a triarylphosphine, a triaryl phosphite or a triarylarsine, or preformed complexes of palladium (II) chloride with such a phosphine, phosphite or arsine, the palladium compound or complex optionally being used together with a co-catalyst such as SnCl₂, CuCl₂, SnI₂, GeCl₂ or PbCl₂; platinum complexes such as H₂PtCl₆ (optionally together with SnCl₂), PtCl₂(AsPh₃)₂, PtCl₂(AsClPh₂)₂ or PtCl₂ [P(OPh)₃]₂; and nickel complexes and mixtures thereof with zinc halides, such as mixtures of Ni[P(OPh)₃]₄ and ZnCl₂. For epoxidation reactions, any of the known homogeneous catalysts can be used. Where selective epoxidation of backbone double bonds is required, a particularly suitable catalyst is MoO2Cl2L where L is [(1R)-endo]-(+)-3-(diethoxyphosphonyl) camphor (see M. Gahagan, A. Iraqi, D.C. Cupertino, R.K. Mackie and D.J. Cole-Hamilton, J. Chem. Soc., Chem-Commun., 1989, 1688). For hydrogenation reactions, any of the homogeneous catalysts conventionally used for such reactions may be used, or heterogeneous catalysts such as palladium/charcoal may be used. Further homogeneous catalysts are described by A. Spencer in Comprehensive Coordination Chemistry, Eds. Wilkinson, Gillard and McCleverty, Pergamon, Oxford 1987, Volume 6, Chapter 61.2, p.267ff and the references cited therein. A catalyst promoter may be used with the catalyst to improve the selectivity of the catalyzed reaction. For example, iodide promoters such as hydriodic acid or methyl iodide may be used with rhodium complexes.

Especially preferred homogeneous catalysts are bis(triphenylphosphine) palladium (II) chloride together with tin (II) chloride, which mixture is particularly useful for effecting selective hydrocarboxylation of pendant double bonds to attach a carboxyl group only to the carbon atom linked to R¹ and R² in formula I, palladium (II) chloride together with cupric chloride, which mixture is useful for effecting hydrocarboxylation of both pendant and backbone double bonds; and bis(triphenylphosphine) palladium (II) chloride together with triphenylphosphine, which mixture also catalyzes hydrocarboxylation of both pendant and backbone double bonds. It has been found that by hydrocarboxylating a polymer of formula I sequentially, firstly in the presence of bis(triphenylphosphine) palladium (II) chloride and tin chloride and then in the presence of bis(triphenylphosphine) palladium (II) chloride and triphenylphosphine, substantially complete hydrocarboxylation of all double bonds may be achieved.

The products of the invention may find utility over a wide range of applications. They are generally solid, film-forming polymers which are soluble in polar organic solvents and in aqueous NaOH. They are particularly useful as additives in the treatment of water, for example to inhibit corrosion or scaling of metal surfaces in contact with the water by inorganic salts, or to act as dispersants. They may also be used, generally in aqueous solution, to treat wood to inhibit penetration of water into the wood.

The invention is illustrated by the following Examples, in which parts and percentages are by weight unless stated otherwise.

The polybutadene starting materials used in the Examples are freed from peroxide by pretreatment with ferrous ammonium sulphate using the following procedure: the polybutadiene (0.2 part) is dissolved in methyl isobutyl ketone (10 parts). To the solution obtained is added an equal amount of a freshly prepared saturated solution of ferrous ammonium sulphate in lM aqueous sulphuric acid. The mixture is shaken and separated in a separating funnel. The organic phase is used directly, unless stated otherwise.

Values for the percentage content of various double bonds in the starting materials and double bonds and hydroxylated double bonds in the products are obtained by FTIR, ¹³C NMR and ¹H NMR analysis. In the Tables, "Mₙ" indicates the number average molecular weight of the starting polybutadiene; "cis-db" and "trans db" indicate respectively the number of cis and trans backbone double bonds as a percentage of the total theoretical number of double bonds; "vinyl db" indicates the number of vinyl double bonds (i.e. pendant, terminal double bonds) as a percentage of the total theoretical number of double bonds; "End group" denotes the terminating groups R⁵ and R¹³ in the starting polybutadiene; "bb =" indicates the number of backbone double bonds in the product as a percentage of the total theoretical number of double bonds in the starting polybutadiene; "bb COOH" indicates the number of backbone carboxyl groups (i.e. the number of hydrocarboxylated backbone double bonds) in the product as a percentage of the total theoretical number of double bonds in the starting polybutadienes; and "pendant COOH" indicates the number of pendant carboxyl groups (i.e. the number of hydroxylated pendant double bonds) in the product as a percentage of the total theoretical number of double bonds in the starting polybutadienes. The actual number of double bonds in the starting polybutadienes may be less than 100% of the theoretical number because some of the double bonds may have been hydrogenated during polymerization of butadiene.

**TABLE 1**

| Composition of Polybutadiene Starting Materials | | | | | |
|---|---|---|---|---|---|
| Polymer No | Mn | cis-db | trans db | Vinyl db | End Group |
| 1 | 1000 | 12 | 19 | 53 | Ph |
| 2 | 1300 | 22 | 32 | 43 | Ph |
| 3 | 1500 | 30 | 42 | 27 | Ph |
| 4 | 1800 | 12 | 19 | 61 | Ph |
| 5 | 3400 | 22 | 50 | 26 | Ph |
| 6 | 4500 | 23 | 37 | 40 | H |
| 7 | - | 20 | 60 | 20 | OH |
| 8 | 3000 | - | 14 | 84 | H |
| 9 | 1480 | - | 16 | 81 | COOH |
| 10 | 3000 | - | 9 | 88 | H |

### Examples 1-10

Bis(triphenylphosphine) palladium (II) chloride (PdCl₂(PPh₃)₂, (0.05g, 7.12 x 10⁻⁵ mole) and tin (II) chloride dihydrate (0.19g, 1.0 x 10⁻³ mole) are added to a nitrogen - saturated mixture of methylisobutyl ketone (10 ml) containing water (0.5 ml) and polybutadiene (0.2g, 0.4 x 10⁻² mole) in a glass vessel. The mixture is stirred for 2-5 minutes to dissolve the catalyst. If necessary the contents are slightly warmed to dissolve the catalyst. The glass vessel is placed in an autoclave. The autoclave is deoxygeneated with nitrogen, flushed three or four times with carbon monoxide at 20-30 atmospheres (2.03 MPa - 3.04 MPa) and finally pressurized to 80 atmospheres (8.11 MPa) with carbon monoxide and sealed. It is heated at 90^{o}C for 4 hours.

After the reaction the apparatus is allowed to cool and the pale reddish brown liquid product is recovered. The solvent is evaporated in a rotary evaporator and the residue dissolved in 2M NaOH (20 ml). The product is then precipitated by adding an equal amount of 7M aqueous hydrochloric acid in portions, separated and dissolved in acetone (20 ml). Magnesium sulphate is added to remove any water present in the acetone solution. The resulting solution is filtered and evaporated to dryness under vacuum to give a solid polymer.

The analyses of the products of Examples 1-10 are shown in Table 2. The products are of formula V where A denotes a hydrogen atom and B denotes a carboxyl group.

The above procedure can be modified slightly to remove residual triphenylphosphine oxide from the product. In this modification, immediately after reaction, the solvent (MIBK) is reduced to less than half the initial volume by evaporation in vacuo. The concentrated solution is poured slowly and gently into a flask containing excess diethyl ether (100 ml) with constant stirring. The product precipitates instantly. After a few minutes of continued stirring, the mixture is left to settle. The product is separated by decantation and dried under vacuum. After this, the procedure remains the same as mentioned above from the extraction with NaOH.

**TABLE 2**

| Composition of Product of Examples 1-10 | | | | | | | |
|---|---|---|---|---|---|---|---|
| Example No | Starting Polymer No | Mₙ | cis-db | trans db | Vinyl db | Pendant COOH | End Group |
| 1 | 1 | 1000 | 12 | 19 | - | 53 | Ph |
| 2 | 2 | 1300 | 22 | 32 | 10 | 33 | Ph |
| 3 | 3 | 1500 | 30 | 42 | - | 27 | Ph |
| 4 | 4 | 1800 | 12 | 19 | - | 61 | Ph |
| 5 | 5 | 3400 | 22 | 50 | 7.0 | 19.0 | Ph |
| 6 | 6 | 4500 | 23 | 37 | - | 40 | H |
| 7 | 7 | - | 20 | 60 | 12 | 8 | OH |
| 8 | 8 | 3000 | - | 14 | - | 84 | H |
| 9 | 9 | 1480 | - | 16 | 14 | 67 | COOH |
| 10 | 10 | 3000 | - | 9 | 9.7 | 78.3 | H |

### Examples 11-16

Carbon monoxide is bubbled through a solution containing tetrahydrofuran (30 ml) and water (1 ml). PdCl₂ (0.14 g, 0.78 m mol) is added, followed by concentrated hydrochloric acid (1.0 ml) and the mixture is stirred until the PdCl₂ dissolves. CuCl₂.2H₂O(O.2659g, 1.55 x 10⁻³ mol) is added to the solution and oxygen is bubbled through the solution. Polybutadiene (0.2 g, 3.7 x 10⁻³ mole) dissolved in tetrahydrofuran (10 ml) is added and the reaction mixture is stirred at room temperature for 16 hours with continuous bubbling of carbon monoxide and oxygen. The solvent is evaporated in a rotary evaporator and the residue is dissolved in 2M aqueous NaOH (20 ml). The product is precipitated by adding an equal amount of 7M aqueous HCl in portions, separated and dissolved in acetone (20 ml). Magnesium sulphate is added to remove any water present in the acetone solution. The resulting solution is filtered and evaporated to dryness under vacuum to give a solid polymer.

The composition of the products of Examples 11-16 is shown in Table 3.

**TABLE 3**

| Composition of Products of Examples 11-16 | | | | | | | |
|---|---|---|---|---|---|---|---|
| Example No | Starting Polymer No | Mₙ | bb= | bb COOH | Vinyl db | Pendant COOH | End Group |
| 11 | 1 | 1000 | 15 | 16 | 14 | 39 | Ph |
| 12 | 2 | 1300 | 32 | 22 | 32 | 11 | Ph |
| 13 | 3 | 1500 | 46 | 26 | 19 | 8 | Ph |
| 14 | 5 | 3400 | 32 | 40 | 12 | 14 | Ph |
| 15 | 6 | 4500 | 12 | 48 | 14 | 26 | H |
| 16 | 9 | 1480 | - | 16 | 70 | 11 | COOH |

### Example 17

The procedure of Example 1 is repeated but, after heating at 90^{o}C for 4 hours, instead of recovering product from the liquid obtained, the liquid is heated with water, bis(triphenylphosphine) palladium II chloride and triphenylphosphine in benzene at 170^{o}C for 4 hours in an autoclove pressurized to 80 atmospheres with carbon monoxide. Recovery of product by a procedure analogous to that of Examples 1 to 10 gives a solid polymer in which all double bonds of the starting polybutadiene have been hydrocarboxylated.

### Example 18

Dichlorobis(triphenylphosphine) palladium(II) [PdCl₂)PPh₃)₂](0.125 g, 1.78 x 10⁻⁴ moles) and tin(II) chloride dihydrate (0.475 g, 2.10 x 10⁻³ moles) were added to a nitrogen saturated mixture of methyl isobutyl ketone (25 cm³) containing H₂O (1.25 cm³) and polybutadiene (0.5 g, 9.25 x 10⁻³ moles) in a 100 cm³ capacity specially designed glass liner. The glass liners/inserts were used to exclude any effects due to foreign ions from the walls of the autoclave. The glass liner was placed in a specially designed autoclave which was deoxygenated with nitrogen, flushed 3-4 times with carbon monoxide at 20-30 atmospheres (2.03 MPa - 3.04 MPa) and finally pressurized at room temperature to 80 atmospheres (8.11 MPa) of carbon monoxide and sealed. It was then placed in an oven and maintained at 90^{o}C for 4 hours.

After the reaction the autoclave was cooled to room temperature either by allowing it to stand at room temperature or by placing it in a water bath circulated with running water. The pressure was released gradually in a fume-cup board and the contents recovered. The solvent was evaporated using a rotary evaporator and the residue dissolved in NaOH (50 cm³/2 mol dm⁻³). The polymer was then precipitated by adding an equal amount of HCl (7 mol dm⁻³) in portions. The polymer was separated, dissolved in acetone (30 cm³) and MgSO₄ was added to remove any water present in the acetone solution. The solution was then filtered and evaporated to dryness under vacuum. The yield obtained was >85%.

Dichlorobis(triphenylphosphine palladium(II) [PdCl₂(PPh₃)₂] (0.028 g, 3.98 x 10⁻⁵ moles) and triphenylphosphine (0.115 g, 4.38 x 10⁻⁴ moles) were added to a nitrogen saturated mixture of benzene (6.0 cm³) containing H₂O (0.225 cm³) and hydrocarboxylated polybutadiene (0.375 g, 4.76 x 10⁻³ moles) in a 100 cm³ capacity specially designed glass liner. The glass liners/inserts were used to exclude any effects due to foreign ions from the walls of the autoclave. The glass liner was placed in a specially designed autoclave which was deoxygenated with nitrogen, flushed 3-4 times with carbon monoxide at 20-30 atmospheres and finally pressurized at room temperature to 80 atmospheres of carbon monoxide and sealed. It was then placed in an oven and maintained at 170^{o}C for 4 hours.

After the reaction the autoclave was cooled to room temperature either by allowing it to stand at room temperature or by placing it in a water bath circulated with running water. The pressure was released gradually in a fume cupboard and the contents recovered. The solvent was evaporated using a rotary evaporator and the residue dissolved in NaOH (20 cm³/2 mol dm⁻³). The polymer was then precipitated by adding an equal amount of HCl (7 mol dm⁻³) in portions. The polymer was separated, dissolved in acetone (20 cm³) and MgSO₄ was added to remove any water present in the acetone solution. The solution was then filtered and evaporated to dryness under vacuum. The yield obtained was >75%. N.m.r. analysis of the polymer indicated that all the double bonds had been hydrocarboxylated with the pendant double bonds being hydrocarboxylated selectively on the terminal C atoms.

### Example 19

A polymer (1 g) obtained as in Example 8 from polymer No. 8 was dissolved in tetrahydrofuran (20 cm³) in an autoclave. After flushing with N₂[PhCl(PPh₃)₃] (0.2 g) was added and the autoclave was closed, pressurized to 50 atmospheres (5.07 MPa) and heated to 100^{o}C for 24 hours.

After cooling to room temperature and resting, the autoclave was opened and the brown solution evaporated to dryness. The residue was dissolved in water containing NaOH (20 cm³, 1 mol dm⁻³) and extracted with CH₂Cl₂(2 x 50 cm³) to remove the catalyst. The aqueous solution was filtered through Hyflo Super-cel then acidified with excess hydrochloric acid to precipitate the polymer which was collected and washed with water (3 x 10 cm³). It was dissolved in acetone (20 cm³) to give a clear solution that was dried over MgSO₄, filtered and evaporated to dryness to give a pale yellow powder. ¹H and ¹³C n.m.r. studies indicated that essentially all of the residual double bonds had been hydrogenated.

## Claims

1. A product obtained by modification, characterized by hydrocarboxylation or, in any order, hydrocarboxylation and one or more reactions selected from hydroformylation, hydrogenation and epoxidation, of a polymer of formula 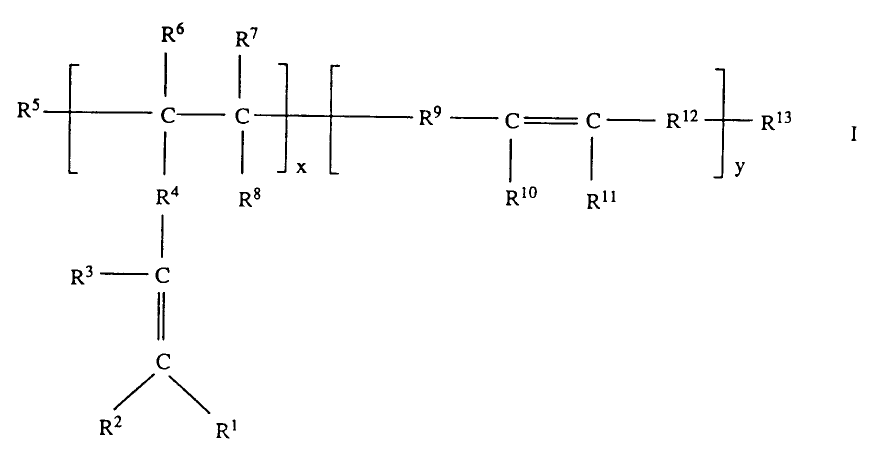 where R¹, R², R³, R⁵, R⁶, R⁷, R⁸, R¹⁰, R¹¹ and R¹³ each independently denote a hydrogen atom, C₁ to C₁₀ alkyl, phenyl, halogen, hydroxyl or carboxyl;
R⁴ denotes a divalent group of formula II 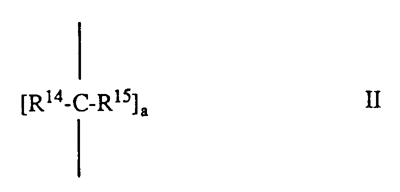 or a divalent cycloaliphatic or heterocyclic group of 3 to 10 carbon atoms;
R⁹ denotes a divalent group of formula III 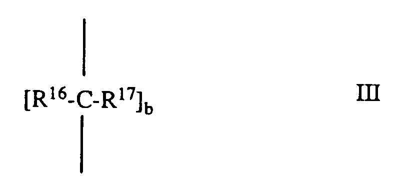 or a divalent cycloaliphatic or heterocyclic group of 3 to 10 carbon atoms;
R¹² denotes a divalent group of formula IV 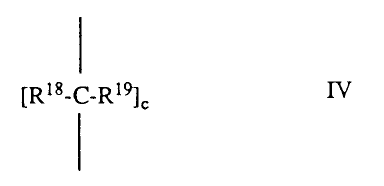 or a divalent cycloaliphatic or heterocyclic group of 3 to 10 carbon atoms;
R¹⁴, R¹⁵, R¹⁶, R¹⁷, R¹⁸ and R¹⁹ each independently denote a hydrogen atom, C₁ to C₁₀ alkyl, halogen, hydroxyl, carboxyl, C₁ to C₁₀ alkoxycarbonyl, C₁ to C₁₀ hydroxyalkoxycarbonyl or C₁ to C₁₀ alkylcarbonyloxy; or R¹⁴ and R¹⁵ alternatively each independently denote phenyl;
x is an integer from 1 to 50,000 and y is an integer from 0 to 50,000, such that x + y is at least 3; and a, b and c are the same or different and are each integers from 0 to 10; the product comprising a polymer of formula 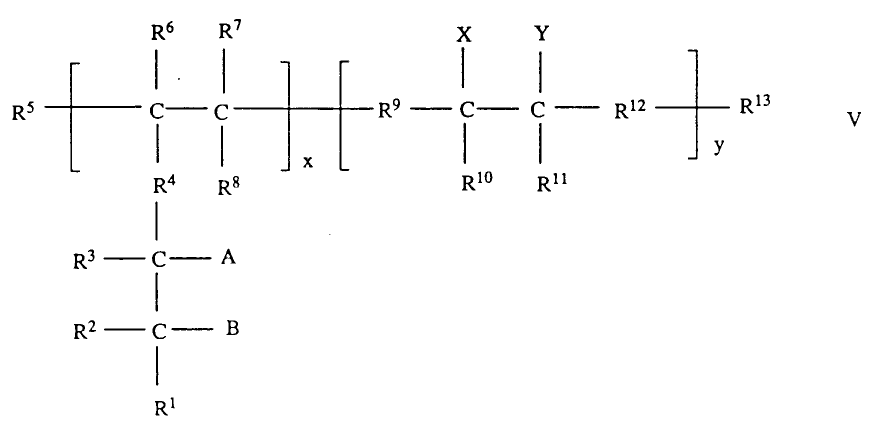 where R¹ to R¹³, x and y are as defined in claim 1; one of A and B denotes a hydrogen atom and the other denotes a hydrogen atom, a carboxyl group or -CHO group, or A and B together with an oxygen atom denote an epoxide group, or A and B together denote a single bond, at least one of the x symbols A or the x symbols B denoting a carboxyl group; and one of X and Y denotes a hydrogen atom and the other denotes a hydrogen atom, a carboxyl group or -CHO group, or X and Y together with an oxygen atom denote an epoxide group, or X and Y together denote a single bond; with the proviso that when (i) the polymer of formula I is a polybutadiene and (ii) said modification is by hydrocarboxylation only and (iii) only pendant double bonds are hydrocarboxylated, the product consists substantially of molecules of formula V where A denotes a hydrogen atom and B denotes carboxyl and is substantially free from molecules of formula V where A denotes carboxyl and B denotes a hydrogen atom.

2. A product according to claim 1, characterized in that the divalent groups R⁴, R⁹ and R¹² respectively denote groups of formulae II, III and IV as defined in claim 1.

3. A product according to claim 1 or 2, characterized in that one or more of R¹ to R³, R⁵ to R⁸ and R¹⁰ to R¹⁹ denote or contain an alkyl or hydroxyalkyl group of 1 to 8 carbon atoms.

4. A product according to claim 3, characterized in that R¹ to R³, R⁵ to R⁸ and R¹⁰ to R¹³ denote hydrogen, methyl, phenyl, hydroxyl or carboxyl.

5. A product according to claim 3 or 4, characterized in that R¹⁴ to R¹⁹ denote hydrogen, methyl, carboxyl, methoxycarbonyl, ethoxycarbonyl, n-butoxycarbonyl, 2-ethylhexyloxycarbonyl or methylcarbonyloxy.

6. A product according to any of the preceding claims, characterized in that a, b and c are each from 0 to 5.

7. A product according to claim 6, characterized in that a is 0 and b and c are each 1.

8. A product according to any of the preceding claims, characterized in that x and y are each from 1 to 10,000.

9. A product according to claim 8, characterized in that x and y are each from 1 to 1000.

10. A product according to claim 9, characterized in that x and y are each from 1 to 100.

11. A product according to any of the preceding claims, characterized in that it has a number average molecular weight Mₙ of 500 to 100,000.

12. A product according to claim 11, characterized in that it has a Mₙ of 500 to 10,000.

13. A product according to claim 12, characterized in that it has a Mₙ of 1000 to 5000.

14. A polymer of formula V as defined in claim 1, characterized in that y is at least 1 and at least one of the y symbols X or the y symbols Y denote a carboxyl group, with the proviso that the polymer is not a homopolymer or copolymer of acrylic acid or methacrylic acid.

15. A polymer of formula V as defined in claim 1, characterized in that at least one of the x symbols A, the x symbols B, the y symbols X and the y symbols Y denotes a -CHO group.

16. A polymer of formula V as defined in claim 1, characterized in that at least one of the x pairs A and B or the y pairs X and Y, A and B or X and Y are each hydrogen, or in which at least one of the x pairs A and B or the y pairs X and Y denotes an epoxide group.

17. A polymer of formula V as defined in claim 1, characterized in that at least 63% of the total of the symbols A or B and X or Y denote a carboxyl group.

18. A product according to any of claims 1 to 13, characterized in that 20 to 100% of the x symbols B denote a carboxyl group, 80 to 0% of the x pairs A and B denote a single bond, 0 to 100% of the y symbols X or Y denote a carboxyl group and 100 to 0% of the y pairs X and Y denote a single bond, said product being substantially free from molecules of formula V where A denotes carboxyl and B denotes a hydrogen atom.

19. A product according to claim 18, characterized in that 60 to 100% of the x symbols B denote a carboxyl group and 0 to 10% of the y symbols X or Y denote a carboxyl group.

20. A product according to claim 18, characterized in that 10 to 80% of the x symbols B denote a carboxyl group and 30 to 100% of the y symbols X or Y denote a carboxyl group.

21. A product according to claim 18, characterized in that each of the x symbols B denotes a carboxyl group and each of the y symbols X or Y denotes a carboxyl group.

22. A product according to claim 1, characterized in that it is a polymer of formula V where R⁵ and R¹³ each independently denote hydrogen, phenyl, hydroxyl or carboxyl; R¹, R², R³, R⁶, R⁷, R⁸, R¹⁰ and R¹¹ each denote hydrogen; R⁴ denotes a carbon-carbon single bond; R⁹ and R¹² each denote a -CH₂ group; and x and y each denote 1 to 100.

23. A process for the modification of a polymer characterized by subjecting a polymer of formula I as defined in claim 1, to hydrocarboxylation or, in any order, to hydrocarboxylation and one or more other reactions selected from hydroformylation, hydrogenation and epoxidation, with the proviso that when (i) the polymer of formula I is a polybutadiene and (ii) said modification is by hydrocarboxylation only and (iii) only pendant double bonds are hydrocarboxylated, hydrocarboxylation is effected to attach a carboxyl group only at the carbon atom linked to R¹ and R².

24. A process according to claim 23, characterized in that it is carried out in the presence of a homogeneous catalyst.

25. A process according to claim 23 or 24, characterized in that the polymer of formula I is a homopolymer or copolymer of a diene.

26. A process according to any of claims 23 to 25, characterized in that the reaction is effected at 0 to 200^{o}C.

27. A process according to any of claims 24 to 26, characterized in that the homogeneous catalyst is a transition metal compound.

28. A process according to claim 27, characterized in that the homogeneous catalyst is a compound of chromium, iron, cobalt, ruthenium, iridium, platinum or molybdenum.

29. A process according to claim 27, characterized in that the homogeneous catalyst is a compound of palladium, rhodium or nickel.

30. A process according to any of claims 27 to 29, characterized in that the transition metal compound is used together with a copper, tin or zinc salt as co-catalyst.

31. A process according to claim 27, characterized in that the homogeneous catalyst is palladium (II) chloride together with cupric chloride as co-catalyst or bis(triphenylphosphine) palladium (II) chloride together with tin (II) chloride as co-catalyst.
